# EUROPEAN PATENT APPLICATION

(11) **EP 2 037 311 A1**
(43) Date of publication of application: **18.03.2009**
(21) Application number: 07116162.4
(22) Date of filing: 11.09.2007
(51) Int. Cl.: G02B 23/18, G02B 27/02, G03B 17/48, H04N 5/225, H04N 5/232

(54) **Binocular system with digital camera**

(71) Applicant: Wings Aktiebolag, 426 77 Västra Frölunda (SE)
(72) Inventor: Witte, Stefan, 426 76, VÄSTRA FRÖLUNDA (SE)
(74) Representative: Edlund, Fabian

(57) **Abstract**

The present invention relates to a viewing module (202) being detachably connected to a digital camera module (204) configured to provide a digital image of a scene, said viewing module comprising two oculars (108) in which the digital image provided by the camera module is viewable, the viewing module being adapted for switching the scene viewable in the oculars between an overview of the scene and a detailed view of the scene, where the detailed view of the scene is a digital still image of the scene.
An advantage with the invention is that it is possible to use an already available camera, such as a users compact camera, and attach the viewing module according to the present invention, thereby making it unnecessary for the user of the camera to purchase an additional combined camera an binocular as provided according to prior art. Instead, the viewing module according to the present invention acts as an accessory to the already available camera module, thus providing additional features to an already available camera module.

## Description

### Field of the invention

The present invention relates to a viewing module which is detachably connected to a digital camera module.

### Description of the related art

In using conventional hand-held viewing instruments, the largest useful magnification is restricted by the difficulty experienced by a user holding such handheld instruments sufficiently stable. The slightest shaking movement of the instrument causes the image viewed by the user to shake. In the case of high degrees of magnification, the shaking movements affect the image to such an extent that as to make perception thereof difficult. Hand-held viewing instruments therefore are rarely used for magnification above ten, and a magnification of seven or eight is common for practical purposes. When viewing instruments are used to view objects that appear small against a large background, such as birds or airplanes against the sky, high-magnification instruments may make it difficult to find the objects one wishes to study. High magnification reduces the field of vision.

WO 98/26321 provides a solution to this problem, in which an instrument with the possibility of freezing the instrument-produced image is disclosed. The frozen image may then be studied without inconvenience, even if the instrument itself is subjected to shaking movements. The technique provides the user with the possibility of studying the frozen image in detail under larger magnification. To find the object to be viewed, the viewer uses a low degree of magnification, which provides the user with an overview of the scene. Thereafter, as soon as the user viewer has found the object of interest and preferably centered it to the centre field of the image, the image can be frozen and studied without being subjected to shaking movements.

However, even though the aforementioned prior art provides high functionality, the solution is relatively high-priced, and thus not suitable for the general consumer.

### Object of the invention

Therefore, there is a need for an improved viewing instrument, and more specifically to an improved viewing instrument that overcome or at least alleviates the cost problems according to prior art.

### Summary of the invention

According to an aspect of the invention, the above object is met by a viewing module being detachably connected to a digital camera module configured to provide a digital image of a scene, said viewing module comprising two oculars in which the digital image provided by the camera module is viewable, the viewing module being adapted for switching the scene viewable in the oculars between an overview of the scene and a detailed view of the scene, where the detailed view of the scene is a digital still image of the scene.

The present invention is based on the understanding that it is possible to combine a standard camera module, such as a system or compact camera with an adapter, i.e. the viewing module according to the present, for forming a viewing system having the advantages of a binocular and further having zoom and storage capabilities in accordance the camera module being used. The present invention is however not limited to the use of a standard camera as stated above, instead, it would of course be possible to use any other type of detachable camera module.

The physical connection between the viewing module and the camera module is preferably achieved by adapting a receiving section of the viewing module in such a way that the form factor of a receiving portion fits the form factor of the camera module. However, it would of course be possible to arrange the receiving portion of the viewing module to be adaptable to a various number of different cameras, for example using inserts specifically adapted for each specific camera.

Advantages provided by the present invention includes the possibility to use an already available camera, such as a users compact camera, and to that attach a viewing module, thereby making it unnecessary for the user of the camera to purchase an additional combined camera an binocular as provided according to prior art. Instead, the viewing module according to the present invention acts as an accessory to the already available camera module, thus providing additional features to the camera module. Hence, the user can choose whether to use the camera as a regular one or as a type of binocular camera. As the viewing module does not comprise expensive electronics it can be manufactured at a relatively low cost, thus making it suitable in a low cost consumer environment. Another advantage with the present invention includes the possibility to use processing power, for example in the form of a control unit, that already is available through the camera module.

The camera module being detachably connected to the viewing module according to the present invention is preferably equipped with an image sensor in the form of for example a CMOS or CCD image sensor. The sensor used in the camera module can depend on the cost segment, where the CMOS sensor generally is cheaper but than also potentially, presently, provide a result having lower quality than a CCD sensor.

Furthermore, since the viewing module according to the present invention provides a moving overview image of the scene it simplifies for the user to obtain a general view and to find an object for the user in an overview search mode, when photographing for instance birds, compared to the case when using a regular camera.

Preferably, the viewing module further comprises two display screens arranged together with each of the oculars, wherein the displays are adapted to receive an image signal from the camera module and to provide a viewable representation of the scene. Similar to the physical connection provided between the camera module and the viewing module according to the present invention, the viewing module is preferably provided with an electrical connection, wired or wireless, for providing the viewing module with a digital representation of the image captured using the camera module.

In an embodiment, the displays and the oculars are arranged in direct contact with each other, however, that is not necessary. Instead it can possibly be some distance between each of the displays and each of the oculars, for example by inserting an optical guide between the displays and the oculars. Further, the image signal can be analog using e.g. VGA or digital using e.g. USB or Firewire.

In a preferred embodiment, the overview of the scene is provided by the camera module using a first lens having a first predetermined magnification, and the detailed view of the scene is provided by the camera module using a second lens having a second predetermined magnification, the first magnification being lower than the second magnification. However, it would also be possible to use a combined zoom lens, providing both the first and the second magnification, for example in the form of a motorized zoom lens possibly controlled using a control unit comprised in the viewing module. Using this type of combined lens makes the end product simpler and more cost efficient. Also, and as is understood by the skilled addressee, the first lower magnification is used for providing the overview of the scene. In an embodiment of the invention, the camera module further comprises communication circuitry and an antenna providing wireless communication between the camera module and another electronic unit. Such an arrangement is especially useful when the user transfers a captured image between the camera module and an externally arranged electronic unit, for example in the form of a laptop or a personal computer. In a preferred embodiment of the present invention the camera module is a mobile telephone comprising a digital camera. As such, it is possible to use the built in communication circuitry and antenna for providing wireless communication with the external electronic unit.

Using the digital camera of a mobile phone instead of a regular digital camera has further advantages, for example there is no need for an extraordinary camera, which comprises wireless communication possibilities. Instead, existing circuitry and camera functionality of the mobile phone can be utilized. For the end consumer this can be better, as camera equipped mobile phones are commonly available, thus resulting in a less expensive end system. Furthermore, in one embodiment of the present invention the viewing module comprises one lens, or more preferably a system of lenses, arranged in front of a lens of the camera module. The lens system can be adapted to provide additional zoom capabilities. In the case of the camera module being a mobile phone comprising a digital camera it might be useful to have the additional lens system adapted to compensate for the potential down scaling commonly performed by the mobile phone camera.

In another preferred embodiment, the viewing module further comprises two additional lenses that are optically connected to each of the oculars, respectively, where the additional lenses has a third predetermined magnification and are arranged to provide an overview of the scene. This combination of two additional lenses that are optically connected to each of the oculars can be used as a pair of binoculars with a photographing function, potentially providing a better "tracking" when in an overview mode. Also, the use of two additional lenses potentially provides the user of the viewing module with a sense of depth information generally present when using a normal binocular. Furthermore, the additional lenses can possibly be adapted to provide the above discussed overview of the scene. Preferably the control unit is further adapted for switching the view provided through the oculars between the image provided by the camera module and the overview of the scene provided by the additional lenses. It would be possible, and within the scope of the invention, to use an over dimensioned camera sensor which generates an image that is over dimensioned in relation to the digital displays in the viewing module. Then, when using the overview setting the image is downscaled to fit to the display. When using the detail view setting, the image viewable in the display is only a, by the user selected, part of the over dimensioned image. For instance, the over dimensioned image could have QVGA-resolution and the display VGA-resolution.

Supplementary storage capabilities may be provided by the viewing module by comprising digital storage means in addition to the digital storage means provided by the camera. Such additional digital storage means may be an USB or a flash memory card, e.g. CompactFlash, Memory Stick, Secure digital etc.

Furthermore and as discussed above, the viewing module according to the present invention is preferably detachably connected to a mobile phone having camera capabilities, thereby forming a viewing system. As understood by the skilled addressee, it would of course be possible, and within the scope of the present invention, to use a different type of camera than the camera equipped mobile phone.

### Brief description of the drawings

These and other aspects of the present invention will now be described in more detail, with reference to the appended drawings showing currently preferred embodiments of the invention, in which:
Figure 1 is a conceptual block diagram of a viewing system comprising a viewing module according to an embodiment connected to a camera module;
Figure 2 shows a perspective view of a viewing module according to an embodiment of the present invention, where a mobile phone camera is partially inserted in the viewing module; and
Figure 3 shows a perspective view of a viewing module according to another embodiment of the present invention, where a mobile phone camera is fully inserted in the viewing module.

### Detailed description of currently preferred embodiments

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled addressee. Like reference characters refer to like elements throughout.

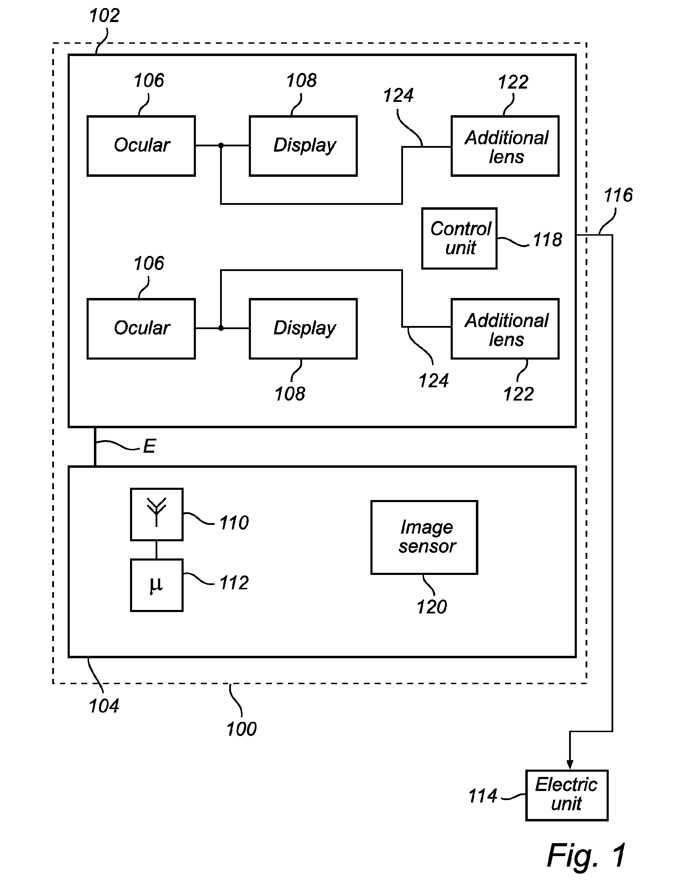

Referring now to the drawings and to figure 1 in particular, there is depicted a block diagram of a viewing system 100. The viewing system 100 comprises a viewing module 102 according to an embodiment of the present invention and a camera module 104, the camera module 104 being detachably connected to the viewing module 102. Furthermore, the viewing module 102 comprise two oculars 106 in which a digital image captured by the camera module 104 is viewable, preferably by looking through the oculars 106 onto two display screens 108 which each are arranged together with the oculars 106. It would however be possible to integrate the oculars and the displays as one part, for example by using display screens 108 adapted to allow for a user to in one state see through the display screens 108, and in another state view the digital image on the display screens 108. Such an implementation is for example possible using LCD display screens. As such, it should be noted that the definition of the oculars 106 should be interpreted as a kind of eyepieces having functionality that provides for blocking out a large portion of external light such that the user more easily can view the display screens 108.

As mentioned above, the camera module 104 is preferably an already existing camera, such as for example a system camera, a compact camera, or a mobile phone having camera capability. By using an already existing camera it is possible to use the available image capturing functionality, and thereby provide a captured digital image of a scene to the display screens 108 arranged together with the oculars 106. The connection between the viewing module 102 and the camera module 104 is thus not only physical, but also electrical, denoted E, for example by means of a wired or wireless connection. Different electrical connections are available, including for example wired connections like USB, FireWire, VGA, or similar, and wireless connections like WLAN, Bluetooth, infrared, or similar. It is understood by the skilled addressee that the art provides numerous different possibilities in regards to the electrical connection between the viewing module 102 and the camera module 104, thereby allowing for the type of camera module 104 used to decide on which electrical connection that should be implemented.

In the presently illustrated embodiment, the camera module 104 is a mobile phone having camera capabilities, thus preferably comprising an antenna 110 and processing means 112 for allowing to transfer captured images from the camera module 104 to an externally arranged electronic unit 114, for example in the for of a portable or stationary computer, such as a laptop, a Personal Digital Assistant (PDA), or a desktop. Using the inbuilt mobile functionality, for example using mobile transmission means (e.g. CDMA, GSM, 3G, or similar), it is also possible to transfer the captured image to a remotely located electronic unit, for example a remote server.

However, it is also possible, and within the scope of the invention, to use a camera module 104 without having the possibility to transfer images directly to the external electronic unit 104. In such a case, the viewing module 102 can be equipped with a similar antenna and processing means as discussed above. In any case, the viewing module 102 preferably comprises a wired output 116 for providing transfer of the image viewable on the display screens to the external electronic unit 114. Similar wired interfaces as described above can be used.

The viewing module preferably comprises a control unit 118 for controlling the communication between the viewing module 102 and the camera module 104, for controlling the communication between the viewing module 102 and the external electronic unit 114, and for controlling the functionality of the viewing system 100. The controlling of the functionality of the viewing system 100 includes controlling the display screens 108, and for switching the viewing state between an overview of the scene and a detailed view of the scene.

The control unit 118 may include a microprocessor, a microcontroller, a programmable digital signal processor or another programmable device. The control unit 118 may also, or instead, include an application specific integrated circuit (ASIC), a programmable gate array programmable array logic, a programmable logic device, or a digital signal processor. Where the control unit 118 includes a programmable device such as the microprocessor or microcontroller mentioned above, the processor may further include computer executable code that controls operation of the programmable device.

In a preferred version of the viewing system 100, both the overview of the scene and the detailed view of the scene are provided by means of the camera module 104. In one case a motorized lens is connected to an image sensor 120 of the camera module, and the switching between the overview and the detailed view if provided by adjusting the magnification of the motorized zoom lens between a lower magnification and a higher magnification. The lower magnification for providing the overview of the scene can for example be predetermined to be around four times, and the detailed view of the scene can for example be predetermined to be around 16 times. It would however be possible to use different magnification levels, however, the detailed view of the scene should preferably be kept to less than six times magnification, as a higher magnification level will be sensitive to shaky movements. This is however not always necessary.

In another preferred embodiment an oversized image sensor 120 is used, thereby, in a general case, making it unnecessary to use a motorized zoom lens. It would however be possible to combine an oversized image sensor 120 and a motorized zoom lens. When using an oversized image sensor 120, the camera module 104 captures, in the overview state, a digital image that is lager that what is possible to display on the display screens 108. Therefore, when switching to the detailed state, only a small portion of the image provided by the image sensor need to be provided to the display screens 108. In an exemplary embodiment the display screens are arranged to display a digital image having a size of 640 times 480 pixels, and the image sensor 120 is able to capture a digital image having a size of 5120 times 3840 pixels, i.e. the image sensor 120 can capture eight times the image information that is viewable on the display screens 108. By downscaling the captured image eight times, i.e. a 8:1 downscaling, the overview of the scene in provided. Then, when switching to the detailed view of the scene, only a 640 times 480 "window" of the originally captured image is made viewable on the display screen, thereby zooming in the image without degenerating the result due to digital zoom. Actually, the resolution viewable on the display screens increases in the switching from the overview of the scene to the detailed view of the scene as the downscaling of the oversized image generally includes a calculation of a mean value for neighboring pixels.

In still another preferred embodiment, the viewing module is further and optionally equipped with two additional lenses 122 for providing an "analog" overview of the scene. This analog overview can be useful in some cases where the image sensor 120 provides an insufficient video signal, i.e. a continuous stream of captured digital images but provides still images having a desired quality. In this embodiment, the viewing module 102 is also provided with optical connectors 124 between the additional lenses 122 and the oculars 106, and also with functionality for switching between the image provided by means of the display screens 108 and the analog image provided by the additional lenses 122. In such a case, the LCD display screens discussed above could be used, or movable display screens that in one state are positioned on the optical path between the oculars 106 and the additional lenses 122 (i.e. in the detailed view of the scene), and another state where the movable display screens are positioned away from the optical path between the additional lenses 122 and the oculars 106. The analog overview provided by means of the additional lenses 122 can have a magnification factor of about four times, but other magnification factors are possible and within the scope of the invention.

When switching between the overview of the scene and the detailed view of the scene, a crosshair, or similar, can be used for indicating the center of the overview. Thus, when in overview mode, the user may "aim" the crosshair at a point in the scene that is of interest, and then switch to the detailed view of the scene, which then will provide a detailed display of the an area having the same center as the crosshair had in the overview of the scene. Other method are known in the art.

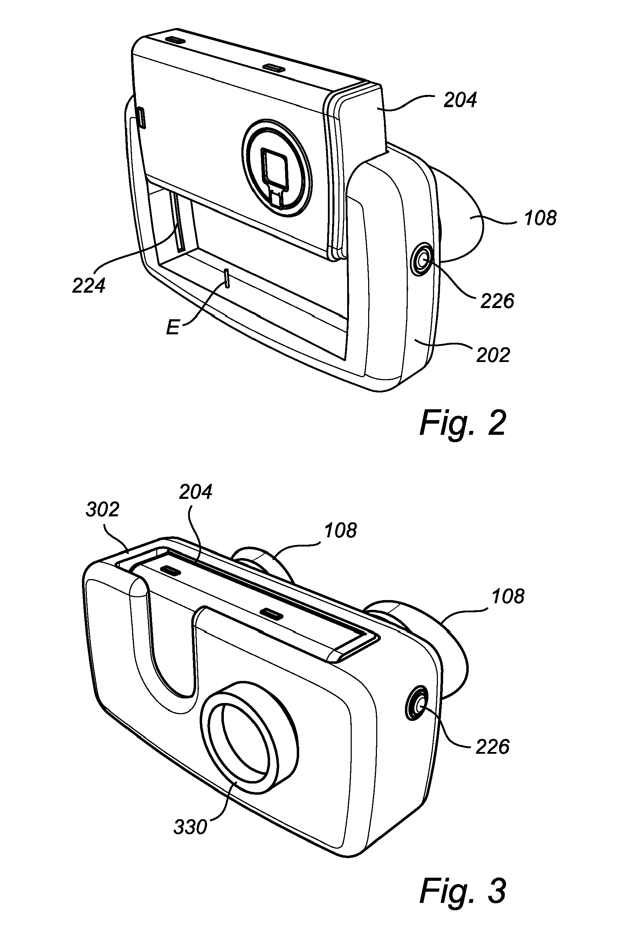

Turing now to figure 2 which shows a perspective view of a viewing module 202 according to an embodiment of the present invention, wherein a mobile phone camera 204 is partially inserted into the viewing module 202 by means of guiding means 224 inside the viewing module 202. As mentioned above, the viewing module 202 comprises two oculars 108 (only one viewable in figure 2) in which a digital image provided by the mobile phone camera is viewable. On one side of the viewing module 202 a push-button 226 is provided for switching the scene viewable in the oculars between the overview of the scene and the detailed view of the scene. The push-button 226 is preferably connected to the control unit 116. The electrical connection between the viewing module 202 and the camera module 204 is denoted E.

Another preferred embodiment of a viewing module 302 is shown in figure 3, in which a mobile phone camera is fully inserted in the viewing module. In this embodiment, the viewing module 302 has been equipped with an additional lens 330 arranged in front of the camera lens of the mobile phone 204. As discussed above, the additional lens (or lens system) can be adapted to provide additional zoom capabilities, and for compensating for the potential down scaling possibly performed by the mobile phone camera. The viewing module in figure 3 has furthermore been equipped with additional guiding means for essentially enclosing the mobile phone 204 in the connected state.

The skilled addressee realizes that the present invention by no means is limited to the preferred embodiments described above. On the contrary, many modifications and variations are possible within the scope of the appended claims. For example, it is possible to provide the viewing module, viewing system, or the camera module with night vision capability, thereby allowing for the possibility to better view objects in dimly lit or night environment. Also, for extra storage capacity, the viewing module can be equipped with digital memory means. Furthermore, the digital still images captured using the camera module can be processed and enhanced using different digital image processing methods known in the art, preferably by means of the control unit comprised in the viewing module according to the present invention.

## Claims

1. A viewing module being detachably connected to a digital camera module configured to provide a digital image of a scene, said viewing module comprising two oculars in which the digital image provided by the camera module is viewable, the viewing module being adapted for switching the scene viewable in the oculars between an overview of the scene and a detailed view of the scene, where the detailed view of the scene is a digital still image of the scene.

2. Viewing module according to claim 1, wherein the viewing module further comprises two display screens arranged together with each of the oculars, the display screens adapted to receive an image signal from the camera module and to provide a viewable representation of the scene.

3. Viewing module according to any of claims 1 or 2, wherein the overview of the scene is provided by the camera module using a first lens having a first predetermined magnification, and the detailed view of the scene is provided by the camera module using a second lens having a second predetermined magnification, the first magnification being lower than the second magnification.

4. Viewing module according to claim 3, wherein the first lens and the second lens are the same lens having adjustable magnification.

5. Viewing module according to any one of the preceding claims, further comprising a control unit for controlling the operation of the camera module.

6. Viewing module according to any one of the preceding claims, wherein the camera module comprises communication circuitry and an antenna for providing wireless communication between the camera module and another electronic unit.

7. Viewing module according to any one of the preceding claims, wherein the camera module is a mobile telephone comprising a digital camera.

8. Viewing module according to any one of the preceding claims, wherein the viewing module further comprises a lens arranged in front of a lens of the camera module, thereby providing additional zoom capabilities.

9. Viewing module according to any one of the preceding claims, wherein the viewing module further comprises two additional lenses that are optically connected to each of the oculars, respectively, the additional lenses having a third predetermined magnification and also arranged to provide an overview of the scene.

10. Viewing module according to claim 9, wherein the control unit is further adapted for switching the view provided through the oculars between the image provided by the camera module and the overview of the scene provided by the additional lenses.

11. A viewing system, comprising a viewing module according to any one of the preceding claims and a mobile telephone having camera capabilities.
